# EUROPÄISCHE PATENTSCHRIFT

(11) **EP 1 421 258 B1**
(45) Veröffentlichungstag und Bekanntmachung des Hinweises auf die Patenterteilung: **15.06.2005**
(21) Anmeldenummer: 02748865.9
(22) Anmeldetag: 24.07.2002
(51) Int. Cl.: F01D 5/18, B23K 20/02

(54) **SCHAUFEL EINER STRÖMUNGSMASCHINE UND VERFAHREN ZUR HERSTELLUNG EINER SOLCHEN SCHAUFEL**
BLADE FOR A TURBINE ENGINE AND METHOD FOR PRODUCTION OF SAID BLADE
AUBE DE TURBOMACHINE ET PROCEDE PERMETTANT DE PRODUIRE UNE AUBE DE CE TYPE

(30) Priorität: 09.08.2001 EP 01119248
(43) Veröffentlichungstag der Anmeldung: 26.05.2004
(73) Patentinhaber: SIEMENS AKTIENGESELLSCHAFT, 80333 München (DE)
(72) Erfinder: PICKERT, Ursula, 45470 Muehleim a.d. Ruhr (DE); TIEMANN, Peter, 58452 Witten (DE)
(86) Internationale Anmeldenummer: PCT/EP2002/008251
(87) Internationale Veröffentlichungsnummer: WO 2003/014528

(56) Entgegenhaltungen:
- US-A- 3 083 446
- US-A- 3 628 226
- US-A- 3 736 638
- US-A- 4 507 051
- US-A- 4 815 939
- US-A- 5 269 058
- US-A- 5 516 593

## Beschreibung

Schaufel einer Strömungsmaschine und Verfahren zur Herstellung einer solchen Schaufel

Die Erfindung betrifft eine Schaufel einer Strömungsmaschine mit einem Grundkörper aus einer Titanlegierung. Sie betrifft weiter ein Verfahren zur Herstellung einer solchen Schaufel.

Eine Laufschaufel eines Verdichters aus einer Titanlegierung ist aus der US 5,063,662 bekannt. Schaufeln auf Titan-Basis bieten den Vorteil erheblicher Gewichtsersparnis gegenüber z. B. Schaufeln aus Stahl. Allerdings sind Titanlegierungen kaum giessbar. Eine geschmiedete Schaufel kann nicht hohl ausgeführt werden, was die Gewichtsersparnis wieder aufzehrt. Eine Möglichkeit zur Herstellung einer solchen Schaufel ist das Bonden zweier Hälften. Dabei werden die Hälften bei hohem Druck und bei hoher Temperatur mit einander verbunden. Anschließend wird die Schaufel verdreht. Zur Formwahrung wird dem hohlen Schaufelinneren unter hohem Druck ein Gas zugeführt. Das Einbringen einer Gaszuführungsleitung in den Schaufelfuß einer Titanschaufel ist Gegenstand der US 5,448,829.

Ferner zeigt die US 5,516,593 eine aus zwei Hälften mittels eines Diffusions-Bonding-Prozesses hergestellte Titan-Turbinenschaufel. An den sich berührenden Kontaktflächen der beiden Hälften im Bereich der Anströmkante und Abströmkante sind in Längserstreckung der Schaufeln verlaufende gegenüberliegende Nuten vorgesehen. Während des Bonding-Prozesses dienen die von den Nuten gebildeten Hohlräume als Ausweichraum für das überschüssige Material, welches ansonsten an der Strömungsoberfläche der Turbinenschaufeln zu Buckeln führen würde.

Der Erfindung liegt die Aufgabe zugrunde, eine Schaufel einer Strömungsmaschine anzugeben, bei der die Festigkeit eines Bonding-Verbindungsbereiches verbessert ist. Des Weiteren soll ein besonders geeignetes Herstellungsverfahren einer solchen Schaufel angegeben werden.

Bezüglich der Schaufel wird diese Aufgabe erfindungsgemäß gelöst durch die Merkmale des Anspruchs 1. Dazu weist die Schaufel einen Flügelprofil aus einer Titanlegierung mit einem ersten schalenförmigen Teilstück und einem zweiten schalenförmigen Teilstück auf, wobei die Teilstücke jeweils von Kontaktflachen begrenzt werden, die einen Verbindungsbereich bildend durch eine Hochdruck- und Hochtemperaturverbindung aneinander gebondet sind, so dass zwischen den Teilstücken ein Hohlraum gebildet ist, der von den Innenseiten der Teilstücke umgeben wird, wobei am Verbindungsbereich zwischen der ersten Innenseite des ersten schalenförmigen Teilstücks und der ersten Kontaktfläche in Längsrichtung der Schaufel eine Nut angeordnet ist, bei der die Nut einerseits an die erste Kontaktfläche des ersten Teilstücks und andererseits an die erste Innenseite des ersten Teilstückes angrenzt, und bei der nur die erste Kontaktfläche mit dem zweiten Teilstück gebondet ist und deren Nutwand mit den Kontaktflächen einen Verbindungswinkel größer als 70 Grad bildet.

Die Erfindung weist eine folglich Schaufel auf, bei der eine Verbindung zwischen der ersten Innenseite und dem zweiten Teilstück besteht nicht, d.h. die erste Innenseite ist nicht mit dem zweiten Teilstück gebondet. Ist dies nicht der Fall, d.h. auch die erste Innenseite ist mit dem zweiten Teilstück gebondet, so ist die mit der Erfindung gezielt herbeigeführte Wirkung, nämlich eine Reduzierung der Materialspannung im Verbindungsbereich, aufgehoben. Somit würde sich eine dortige Verbindung negativ auswirken und die Verbindung würde den auftretenden Belastungen nicht standhalten.

Der Erfindung liegt die Erkenntnis zugrunde, dass die Verbindung durch einen Bonding-Prozeß bei einer Schaufel zu Festigkeitsproblemen bei spitzen Winkeln führen kann. Gerade beim Bonden einer Schaufel aus zwei Hälften, die an der Anströmkante und an der Abströmkante miteinander verbunden werden, treten solche spitzen Winkel auf. Hierdurch kommt es zu einer lokal sehr hohen Spannungskonzentration, die zu einem Aufreißen der Verbindung führen kann.

Durch die im Verbindungsbereich angeordnete Nut wird der spitze Winkel, unter dem normalerweise das erste und das zweite Teilstück aufeinander treffen würden, auf einen Wert größer als 70 Grad geändert. Hierdurch wird die lokale Spannungskonzentration im Verbindungsbereich so weit gesenkt, dass die Gefahr eines Aufreißens der Verbindung zwischen dem ersten und dem zweiten Teilstück nicht mehr besteht.

In weiterer vorteilhafter Ausgestaltung verläuft am Verbindungsbereich zwischen der Innenseite des zweiten Teilstücks und der zweiten Kontaktfläche eine in Längsrichtung der Schaufel verlaufende der Nut gegenüberliegend eine Gegennut mit einer Gegennutwand derart, dass die Gegennutwand und die Nutwand am Verbindungsbereich bündig aneinandergrenzen und den Verbindungswinkel bilden. In dieser Ausgestaltung kann der Verbindungswinkel in einfacher Weise noch über 90 Grad vergrößert werden.

Der Verbindungswinkel kann mehr als 120 Grad, insbesondere mehr als 150 Grad betragen. Besonders vorteilhaft ist ein Verbindungswinkel von etwa 180 Grad, bei dem die Nutwand und die Gegennutwand unmittelbar am Nutrand rechtwinklig zur Oberfläche des ersten und zweiten Teilstückes orientiert sind.

Vorzugsweise umfasst die Titanlegierung Titanaluminid. Titanaluminid weist besonders günstige Eigenschaften hinsichtlich einer Hochtemperaturfestigkeit auf. Aber auch bei Titanaluminid besteht die Notwendigkeit eines Bondens bei der Herstellung der Schaufel. Durch die Verbesserung der Verbindungsfestigkeit im Bonding-Bereich mittels der Nut wird Titanaluminid auch für Anwendungen mit großen Festigkeitsanforderungen verfügbar.

In vorteilhafter Ausgestaltung verläuft die Nut entlang des gesamten Verbindungsbereiches. Denkbar ist zwar auch ein teilweises Einbringen der Nut in z.B. besonders mechanisch beanspruchten Bereichen. Es könnten auch mehrere Nuten vorgesehen werden. Fertigungstechnisch besonders einfach ist jedoch, eine einzige, sich entlang des gesamten Verbindungsbereiches erstreckende Nut vorzusehen.

Zweckmäßigerweise weist die Nut eine sich entlang der Nutrichtung ändernde Nuttiefe auf. Dabei bilden das erste Teilstück und das zweite Teilstück im Verbindungsbereich eine gemeinsame Wanddicke, die sich entlang des Verbindungsbereich ändert, wobei die Nuttiefe mit größerer Wanddicke tiefer wird. In dieser Ausgestaltung ist die Nut in ihrer Abmessung an die Wanddicke angepasst. Bei einer größeren Wanddicke wird es aufgrund der lokalen Spannungsverteilung im Verbindungsbereich nötig, die Nut tiefer auszuführen, um eine ausreichende Verschiebung der in dem Verbindungsbereich wirkenden Kräfte zu Winkeln größer als 70 Grad zu bewirken. Die Nuttiefe sollte sich dabei kontinuierlich mit der Wanddicke ändern.

Ist die Nut im Querschnitt oval oder halbkreisförmig, so bildet sie dabei zweckmäßigerweise mit einer ebenfalls halbkreisförmigen Gegennut eine Ringnut. Der Durchmesser dieser Ringnut ändert sich entsprechend der Wanddicke im Verbindungsbereich. Bei größeren Wanddicken liegt ein größerer Durchmesser vor.

Das erste bzw. zweite Teilstück kann die Saugseite bilden, während dann das zweite bzw. erste Teilstück die Druckseite bildet.

Die Schaufel ist insbesondere für eine letzte Stufe einer Gasturbine als Gasturbinenlaufschaufel ausgeführt. Bei einer Gasturbinenschaufel bestehen besonders hohe Anforderungen an eine Hochtemperaturfestigkeit. Besonders bevorzugt weist die Gasturbinenschaufel dabei eine Schaufellänge größer als 60 cm auf. Bei solch großen Schaufeln kommt es zu einer sehr großen Fliehkraftbelastung. Gerade hier ist eine Gewichtsersparnis besonders vorteilhaft und damit eine Verwendung einer Titanlegierung für den Grundkörper. Wiederum aufgrund der besonders hohen mechanischen Belastung ist aber ein konventioneller Bonding-Prozess nicht ausreichend, um Teilstücke sicher miteinander zu verbinden. Erst mit der im Verbindungsbereich verlaufenden Nut ist es möglich, die Verbindung ausreichend sicher herzustellen.

Bezüglich des Verfahrens wird die Aufgabe erfindungsgemäß gelöst durch die Merkmale des Anspruchs 12. Dabei werden ein erstes schalenförmiges Teilstück und ein zweites schalenförmiges Teilstück eines Flügelprofils aus einer Titanlegierung, das aus einem ersten schalenförmigen Teilstück besteht, wobei die Teilstücke jeweils von Kontaktflächen begrenzt sind, die einen Verbindungsbereich bildend durch eine Hochdruck- und Hochtemperaturverbindung aneinander gebondet werden, so dass zwischen den Teilstücken ein Hohlraum gebildet ist, der von den Innenseiten der Teilstücke umgeben wird, wobei vor dem Bonden in mindestens einem Teilstück im Verbindungsbereich zwischen der Innenseite des Teilstücks und der Kontaktfläche eine in Längsrichtung der Schaufel verlaufende Nut eingebracht wird, deren Nutwand mit der Kontaktfläche einen Verbindungswinkel größer als 70 Grad bildet.

Nachfolgend werden Ausführungsbeispiele der Erfindung anhand einer Zeichnung näher erläutert. Darin zeigen: teilweise schematisch und nicht maßstäblich:
- FIG 1: eine Gasturbinenlaufschaufel in einer Seitenansicht,
- FIG 2: die Gasturbinenlaufschaufel gemäß FIG 1 in einer anderen Seitenansicht,
- FIG 3-9: Schnittdarstellungen entlang der Linien III-III, IV-IV, V-V, VI-VI, VII-VII, VIII-VIII bzw. IX-IX in FIG 2,
- FIG 10: einen vergrößerten Ausschnitt durch die Gasturbinenlaufschaufel gemäß FIG 1
- FIG 11: eine Gasturbine, und
- FIG 12: in einer Darstellung gemäß FIG 10 eine Schaufel gemäß dem Stand der Technik.

Einander entsprechende Teile sind in allen Figuren mit den gleichen Bezugszeichen versehen.

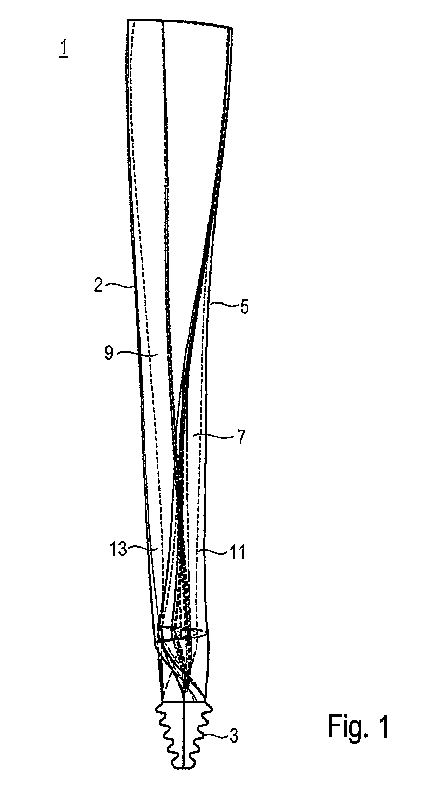

Figur 1 zeigt eine Ansicht einer Gasturbinenlaufschaufel 1, die aus einem Grundkörper 2 aus einer Titanaluminid-Legierung aufgebaut ist. Je nach Anwendung kann auf den Grundkörper 2 auch eine Schutzschicht aufgebracht sein, insbesondere eine Korrosionsschutzschicht. Die Gasturbinenlaufschaufel 1 weist einen Schaufelfüß 3 auf, der tannenbaumartig geformt ist um in nicht näher dargestellter Art und Weise in eine entsprechende Nut einer Radscheibe einzugreifen. An den Schaufelfuß 3 schließt sich ein Schaufelblatt 5 an, das eine Saugseite 7 und eine Druckseite 9 aufweist.

Die Gasturbinenlaufschaufel 1 ist aus einem ersten Teilstück 11 und einem zweiten Teilstück 13 gebildet. Das erste Teilstück 11 bildet die Saugseite 7. Das zweite Teilstück 13 bildet die Druckseite 9. Die beiden schalenförmigen Teilstücke 11,13, die üblicherweise aus blechförmiger Gestalt vorliegen, sind miteinander durch einen Hochdruck- und Hochtemperaturbondingprozess verbunden.

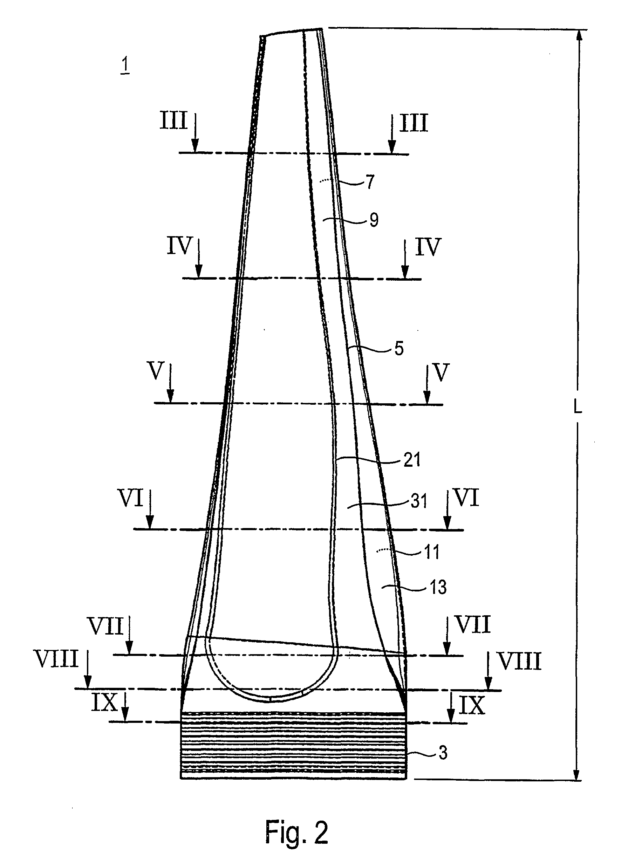

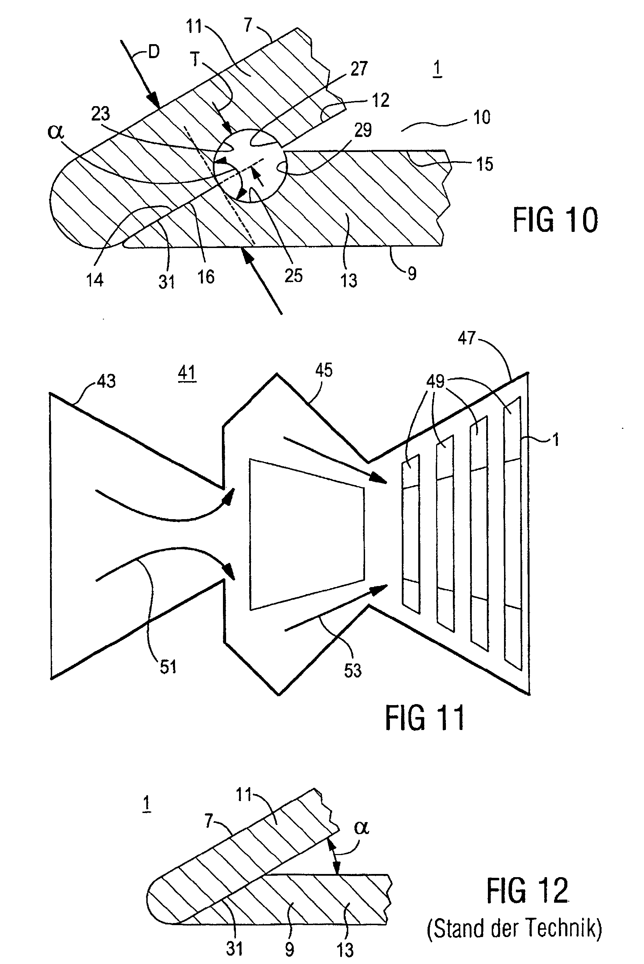

Figur 2 zeigt eine weitere Ansicht der Gasturbinenlaufschaufel 1. In einem Verbindungsbereich 31 (siehe auch Figur 10) sind die Teilstücke 11,13 miteinander durch den Bondingprozess verbunden. In dem Verbindungsbereich 31 verläuft eine Ringnut 21, durch den die Verbindung gegen ein Aufreißen gesichert wird.

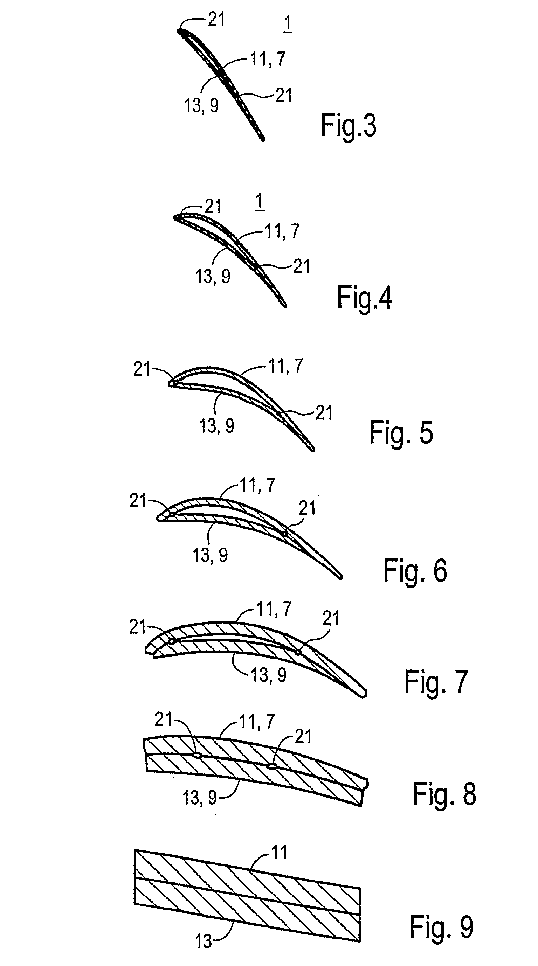

Die Figuren 3 bis 9 zeigen die in Figur 2 eingezeichneten Querschnitte. Man erkennt, dass die Wanddicke der Gasturbinenlaufschaufel 1 zum Schaufelfuß hin zunimmt. In entsprechender Weise nimmt auch der Durchmesser der Ringnut 21 zu. Die Teilstücke 11 und 13 schließen einen Hohlraum 10 ein, der eine innere Kühlung mittels eines Kühlfluids ermöglichen kann. Weiterhin ist die Gasturbinenlaufschaufel 1 durch die hohle Ausführung und durch die Verwendung der Titanlegierung für den Grundkörper 2 vergleichsweise leicht. Dementsprechend kann sie auch groß ausgeführt werden. Die Schaufellänge L beträgt z. B. 940 cm.

Wie aus den Figuren 3 bis 9 ersichtlich ist, stoßen die Teilstücke 11 und 13 unter einem spitzen Winkel zusammen. Bei einer konventionellen Verbindung mittels eines Bondingprozesses könnte es unter den extremen Belastungen beim Einsatz in einer Gasturbine zu einem Aufreißen der Verbindung kommen, bedingt durch eine sehr hohe lokale Spannungskonzentration. Dies wird durch die Ringnut 21 verhindert, die den spitzen Verbindungswinkel vergrößert, wie im folgenden näher erläutert wird.

Figur 12 zeigt einen Bonding-Verbindungsbereich 31 an einer Schaufeleintrittskante gemäß dem Stand der Technik. Die Teilstücke 11 und 13 bilden mit ihren Innenseiten im Verbindungsbereich 31 einen Verbindungswinkel α. Der Verbindungswinkel α ist kleiner als 70 Grad. Hierdurch kommt es zu einer sehr hohen lokalen Spannungskonzentration an der Innenseite des Verbindungsbereiches 31, was wiederum zu einem Aufreißen der Verbindung führen kann.

In Figur 10 ist dargestellt, wie durch die Ringnut 21 die Verbindung zwischen den Teilstücken 11 und 13 verbessert wird. Die Ringnut 21 ist gebildet durch eine Nut 23 im ersten Teilstück 11 und durch eine der Nut 23 gegenüberliegende Gegennut 25 im zweiten Teilstück 13. Die Nut 23 verläuft zwischen der ersten Kontaktfläche 14 und der ersten Innenseite 12, die Gegennut 25 zwischen der zweiten Kontaktfläche 16 und der zweiten Innenseite 15. Die Nut 23 ist - wie auch die Gegennut 25 - halbkreisförmig ausgeführt, so dass sich der kreis- oder ringförmige Querschnitt der Ringnut 21 ergibt. Die Nut 23 weist eine Nutwand 27 auf. Die Gegennut 25 weist eine Gegennutwand 29 auf. Die Nutwand 27 schließt mit der Gegennutwand 29 bündig ab. Durch die Nutwand 27 und die Gegennutwand 29 wird der Verbindungswinkel α zwischen dem ersten Teilstück 11 und dem zweiten Teilstück 13 auf etwa 180 Grad vergrößert. Hierdurch wird die lokale Spannungskonzentration und das Risiko des Aufreißens der Verbindung stark verringert. Klar erkennbar ist, dass die erste Innenseite 12 und die zweite Innenseite 15 nicht miteinander verbunden d.h. gebondet sind. Eine dortige Verbindungsstelle würde die durch die Erfindung einhergehende Wirkung, Verminderung des Spannungskonzentration im Verbindungsbereich, zunichte machen. Die Nut 23 weist eine Nuttiefe T auf. Gemessen senkrecht zum Verbindungsbereich 31 und in dessen Mitte weist die Gasturbinenschaufel 1 eine Wanddicke D auf, die durch die Wanddicken des ersten und zweiten Teilstückes 11, 13 gebildet ist. Die Nuttiefe T wächst in gleichem Maße wie die Wanddicke D entlang des Verbindungsbereiches 31.

Figur 11 zeigt eine Gasturbine 41 mit einem Verdichter 43, einer Brennkammer 45 und einem Turbinenteil 47. Luft 51 wird vom Verdichter 43 hoch verdichtet und der Brennkammer 45 zugeleitet. Dort wird sie mit Brennstoff zu einem Heißgas 53 verbrannt, welches in das Turbinenteil 47 strömt. Dort strömt es an Schaufelkränzen 49 vorbei und treibt damit die Gasturbine 41 an. Gerade im letzten Schaufelkranz 49 des Turbinenteils 47 sind große Laufschaufeln 1 angeordnet, da sich der Strömungskanal des Turbinenteils 47 konisch erweitert. Diese Laufschaufeln 1 sind besonders hohen Fliehkräften ausgesetzt und eine Gewichtsreduktion durch Verwendung einer Titanlegierung ist hier besonders vorteilhaft.

## Patentansprüche

1. Schaufel (1) einer Strömungsmaschine mit einem Flügelprofil (5) aus einer Titanlegierung, das aus einem ersten schalenförmigen Teilstück (11) und einem zweiten schalenförmigem Teilstück (13) besteht, wobei die Teilstücke (11, 13) jeweils von Kontaktflächen (14, 16) begrenzt werden, die einen Verbindungsbereich (31) bildend durch eine Hochdruck- und Hochtemperaturverbindung aneinander gebondet sind, so dass zwischen den Teilstücken (11, 13) ein Hohlraum (10) gebildet ist, der von den Innenseiten (12, 15) der Teilstücke (11, 13) umgeben wird,
wobei im Verbindungsbereich (31) zwischen der ersten Innenseite (12) des ersten schalenförmigen Teilstücks (11) und der ersten Kontaktfläche (14) eine in Längsrichtung der Schaufel verlaufende Nut (23) angeordnet ist, deren Nutwand (27) mit den Kontaktflächen (14, 16) einem Verbindungswinkel (α) größer als 70° bildet
**dadurch gekennzeichnet,**
**dass** die Nut (23) einerseits an die erste Kontaktfläche (14) des ersten Teilstücks (11) und andererseits an die erste Innenseite (12) des ersten Teilstückes (11) angrenzt, und bei der nur die erste Kontaktfläche (14) mit dem zweiten Teilstück (13) gebondet ist.

2. Schaufel (1) nach Anspruch 1,
**dadurch gekennzeichnet,**
**dass** am Verbindungsbereich (31) zwischen der zweiten Innenseite (15) des zweiten Teilstücks (11) und der zweiten Kontaktfläche (16) eine in Längsrichtung der Schaufel verlaufende, der Nut (23) gegenüberliegende Gegennut (25) mit einer Gegennutwand (29) derart angeordnet ist, dass die Gegennutwand (29) und die Nutwand (27) am Verbindungsbereich (31) bündig aneinandergrenzen und einen Verbindungswinkel (α) von mehr als 120° bilden.

3. Schaufel (1) nach Anspruch 2,
**dadurch gekennzeichnet,**
**dass** der Verbindungswinkel (α) mehr als 150° beträgt.

4. Schaufel (1) nach einem der Ansprüche 1 bis 3,
**dadurch gekennzeichnet,**
**dass** die Titanlegierung Titanaluminid ist.

5. Schaufel (1) nach einem der Ansprüche 1 bis 4,
**dadurch gekennzeichnet,**
**dass** die Nut (23) entlang des gesamten Verbindungsbereiches (31) verläuft.

6. Schaufel (1) nach einem der Ansprüche 1 bis 5,
**dadurch gekennzeichnet,**
**dass** die Nut (23) eine sich entlang der Nutrichtung ändernde Nuttiefe (T) aufweist.

7. Schaufel (1) nach einem der Ansprüche 1 bis 6,
**dadurch gekennzeichnet,**
**dass** das erste Teilstück (11) und das zweite Teilstück (13) im Verbindungsbereich (31) eine gemeinsame Wanddicke (D) bilden, die sich entlang des Verbindungsbereiches (31) ändert, wobei die Nuttiefe (T) mit größerer Wanddicke (D) tiefer wird.

8. Schaufel (1) nach einem der Ansprüche 1 bis 7,
**dadurch gekennzeichnet,**
**dass** die Nut (23) im Querschnitt oval oder halbkreisförmig ist.

9. Schaufel (1) nach einem der Ansprüche 1 bis 8,
**dadurch gekennzeichnet,**
**dass** das erste Teilstück (11) bzw. das zweite Teilstück (13) die Saugseite und das zweite Teilstück (13) bzw. das erste Teilstück (11) die Druckseite bildet.

10. Schaufel (1) nach einem der Ansprüche 1 bis 9,
**dadurch gekennzeichnet,**
**dass** die Schaufel als Gasturbinenlaufschaufel ausgeführt ist, insbesondere für eine letzte Stufe einer Gasturbine (41).

11. Schaufel (1) nach einem der Ansprüche 1 bis 10,
**dadurch gekennzeichnet,**
**dass** die Schaufellänge (L) größer als 60 cm.

12. Verfahren zur Herstellung einer Schaufel (1) für eine Strömungsmaschine mit einem Flügelprofil (5) aus einer Titanlegierung, das aus einem ersten schalenförmigen Teilstück (11) und einem zweiten schalenförmigem Teilstück (13) besteht, wobei die Teilstücke (11, 13) jeweils von Kontaktflächen (14, 16) begrenzt sind, die einen Verbindungsbereich (31) bildend durch eine Hochdruck- und Hochtemperaturverbindung aneinander gebondet werden, so dass zwischen den Teilstücken (11, 13) ein Hohlraum (10) gebildet ist, der von den Innenseiten (12, 15) der Teilstücke (11, 13) umgeben wird,
wobei im Verbindungsbereich zwischen der ersten Innenseite (12) des ersten schalenförmigen Teilstücks (11) und der ersten Kontaktfläche (14) eine in Längsrichtung der Schaufel (1) verlaufende Nut (23) angeordnet ist, deren Nutwand (27) mit der Kontaktfläche (14) einem Verbindungswinkel (α) größer als 70° gebildet ist **dadurch gekennzeichnet, dass**
vor dem Bonden in mindestens einem Teilstück (11, 13) im Verbindungsbereich (31) zwischen der Innenseite (12, 15) des schalenförmigen Teilstücks (11, 13) und der Kontaktfläche (14, 16) eine in Längsrichtung der Schaufel verlaufende Nut (23) eingebracht wird,
dass nach dem Bonding Prozess die Nut (23) einerseits an die erste Kontaktfläche (14) des ersten Teilstücks (11) und andererseits an die erste Innenseite (12) des ersten Teilstückes (11) angrenzt, und bei der nur die erste Kontaktfläche (14) mit dem zweiten Teilstück (13) gebondet ist.

## Claims

1. Blade or vane (1) of a turbomachine having a blade or vane profile (5) made from a titanium alloy, which comprises a first shell-like component piece (11) and a second shell-like component piece (13), the component pieces (11, 13) each being delimited by contact surfaces (14, 16) which are bonded to one another by means of a high-pressure and high-temperature join, so as to form a joining region (31), such that a cavity (10), which is surrounded by the inner sides (12, 15) of the component pieces (11, 13) is formed between the component pieces (11, 13), wherein a groove (23), which runs in the longitudinal direction of the blade or vane, is arranged in the joining region (31) between the first inner side (12) of the first shell-like component piece (11) and the first contact surface (14), the wall (27) of the groove forming a joining angle (α) of greater than 70° with the contact surfaces (14, 16), **characterized in that** the groove (23) on one side adjoins the first contact surface (14) of the first component piece (11) and on the other side adjoins the first inner side (12) of the first component piece (11), and wherein only the first contact surface (14) is bonded to the second component piece (13).

2. Blade or vane (1) according to Claim 1, **characterized in that** an opposite groove (25) with an opposite-groove wall (29), which lies opposite the groove (23) and runs in the longitudinal direction of the blade or vane, is arranged at the joining region (31) between the second inner side (15) of the second component piece (11) and the second contact surface (16), in such a manner that the opposite-groove wall (29) and the groove wall (27) adjoin one another flush at the joining region (31) and form a joining angle (α) of more than 120°.

3. Blade or vane (1) according to Claim 2, **characterized in that** the joining angle (α) is more than 150°.

4. Blade or vane (1) according to one of Claims 1 to 3, **characterized in that** the titanium alloy is titanium aluminide.

5. Blade or vane (1) according to one of Claims 1 to 4, **characterized in that** the groove (23) runs along the entire joining region (31).

6. Blade or vane (1) according to one of Claims 1 to 5, **characterized in that** the groove (23) has a groove depth (T) which varies along the groove direction.

7. Blade or vane (1) according to one of Claims 1 to 6, **characterized in that** the first component piece (11) and the second component piece (13), in the joining region (31), form a common wall thickness (D) which varies along the joining region (31), with the groove depth (T) becoming deeper as the wall thickness (D) increases.

8. Blade or vane (1) according to one of Claims 1 to 7, **characterized in that** the groove (23) is oval or semicircular in cross section.

9. Blade or vane (1) according to one of Claims 1 to 8, **characterized in that** the first component piece (11) or the second component piece (13) forms the suction side and the second component piece (13) or the first component piece (11), respectively, forms the pressure side.

10. Blade or vane (1) according to one of Claims 1 to 9, **characterized in that** the blade or vane is designed as a gas turbine rotor blade, in particular for a final stage of a gas turbine (41).

11. Blade or vane (1) according to one of Claims 1 to 10, **characterized in that** the blade or vane length (L) is greater than 60 cm.

12. Process for producing a blade or vane (1) of a turbomachine having a blade or vane profile (5) made from a titanium alloy, which comprises a first shell-like component piece (11) and a second shell-like component piece (13), the component pieces (11, 13) each being delimited by contact surfaces (14, 16), which are bonded to one another by means of a high-pressure and high-temperature join, so as to form a joining region (31), such that a cavity (10), which is surrounded by the inner sides (12, 15) of the component pieces (11, 13), is formed between the component pieces (11, 13), wherein a groove (23), which runs in the longitudinal direction of the blade or vane (1), is arranged in the joining region between the first inner side (12) of the first shell-like component piece (11) and the first contact surface (14), the wall (27) of the groove forming a joining angle (α) of greater than 70° with the contact surface (14), **characterized in that** prior to the bonding a groove (23), which runs in the longitudinal direction of the blade or vane is introduced in at least one component piece (11, 13) in the joining region (31) between the inner side (12, 15) of the shell-like component piece (11, 13) and the contact surface (14, 16), **in that** after the bonding process the groove (23) on one side adjoins the first contact surface (14) of the first component piece (11) and on the other side adjoins the first inner side (12) of the first component piece (11), and wherein only the first contact surface (14) is bonded to the second component piece (13).

## Revendications

1. Aube (1) d'une turbomachine ayant un profilé (5) d'aile en un alliage de titane, qui est constituée d'une première sous-pièce (11) en forme de coque et d'une deuxième sous-pièce (13) en forme de coque, les sous-pièces (11, 13) étant délimitées, respectivement, par des surfaces (14, 16) de contact qui sont liées l'une à l'autre par une liaison résistant aux hautes pressions et aux hautes températures en formant une zone (31) de liaison de manière à former entre les sous-pièces (11, 13) une cavité (10) qui est entourée par les faces (12, 15) intérieures des sous-pièces (11, 13), une rainure (23), dont la paroi (27) fait avec les surfaces (14, 16) de contact un angle (α) de liaison plus grand que 70 degrés et qui s'étend dans la direction longitudinale, étant disposée dans la zone (31) de liaison entre la première face (12) intérieure de la première sous-pièce (11) en forme de coque et la première surface (14) de contact, **caractérisée en ce que** la rainure est voisine d'une part de la première surface (14) de contact de la première sous-pièce (11) et d'autre part de la première face (12) intérieure de la première sous-pièce (11) et seule la première surface (14) de contact est reliée à la deuxième sous-pièce (13).

2. Aube (1) suivant la revendication 1, **caractérisée en ce qu'**une rainure (25) antagoniste ayant une paroi (29) qui s'étend dans la direction longitudinale de l'aube et qui est opposée à la rainure (23) est disposée dans la zone (31) de liaison entre la deuxième face (15) intérieure de la deuxième sous-pièce (11) et la deuxième surface (16) de contact de sorte que la paroi (29) de la rainure antagoniste et la paroi (27) de la rainure sont à affleurement dans la zone (31) de liaison et font un angle (α) de liaison de plus de 120 degrés.

3. Aube (1) suivant la revendication 2, **caractérisée en que** l'angle (α) de liaison est plus grand que 150 degrés.

4. Aube (1) suivant l'une des revendications 1 à 3, **caractérisée en ce que** l'alliage de titane est de l'aluminure de titane.

5. Aube (1) suivant l'une des revendications 1 à 4, **caractérisée en ce que** la rainure s'étend le long de toute la zone (31) de liaison.

6. Aube (1) suivant l'une des revendications 1 à 5, **caractérisée en ce que** la rainure (23) a une profondeur (T) qui se modifie le long de la direction de la rainure.

7. Aube (1) suivant l'une des revendications 1 à 6, **caractérisée en ce que** la première sous-pièce (11) et la deuxième sous-pièce (13) forment dans la zone (31) de liaison une épaisseur (D) de paroi commune qui se modifie le long de la zone (31) de liaison, la profondeur (T) étant plus grande au fur et à mesure que l'épaisseur (D) de la paroi augmente.

8. Aube (1) suivant l'une des revendications 1 à 7, **caractérisée en ce que** la rainure (23) a une section transversale ovale ou hémicirculaire.

9. Aube (1) suivant l'une des revendications 1 à 8, **caractérisée en ce que** la première sous-pièce (11) ou la deuxième sous-pièce (13) forme l'extrados et la deuxième sous-pièce (13) ou la première sous-pièce (11) forme l'intrados.

10. Aube (1) suivant l'une des revendications 1 à 9, **caractérisée en ce que** l'aube est réalisée en aube mobile de turbine à gaz, notamment pour un dernier étage d'une turbine (41) à gaz.

11. Aube (1) suivant l'une des revendications 1 à 10, **caractérisée en ce que** la longueur (L) de l'aube est supérieure à 60 cm.

12. Procédé de fabrication d'une aube (1) pour une turbomachine ayant un profilé (5) d'aile en un alliage de titane qui est constituée d'une première sous-pièce (11) en forme de coque et d'une deuxième sous-pièce (13) en forme de coque, les sous-pièces (11, 13) étant délimitées, respectivement, par des surfaces (14, 16) de contact qui sont liées l'une à l'autre par une liaison résistant aux hautes pressions et aux hautes températures en formant une zone (31) de liaison de manière à former entre les sous-pièces (11, 13) une cavité (10) qui est entourée par les faces (12, 15) intérieures des sous-pièces (11, 13), une rainure (23), dont la paroi (27) fait avec les surfaces (14, 16) de contact un angle (α) de liaison plus grand que 70 degrés et qui s'étend dans la direction longitudinale, étant disposée entre la première face (12) intérieure de la première sous-pièce (11) en forme de coque et la première surface (14) de contact, **caractérisé**
**en ce qu'**on ménage avant la liaison dans au moins une sous-pièce (11, 13) dans la zone (31) de liaison entre la face (12, 15) intérieure de la sous-pièce (11, 13) en forme de coque et la surface (14, 16) de contact une rainure (23) s'étendant dans la direction longitudinale de l'aube,
**en ce qu'**après l'opération de liaison, la rainure (23) est voisine d'une part de la première surface (14) de contact de la première sous-pièce (11) et d'autre part de la première face (12) intérieure de la première sous-pièce (11) et seule la première surface (14) de contact est reliée à la deuxième sous-pièce (13).
